# EUROPEAN PATENT SPECIFICATION

(11) **EP 3 614 483 B1**
(45) Date of publication and mention of the grant of the patent: **26.07.2023**
(21) Application number: 18190195.0
(22) Date of filing: 22.08.2018
(51) Int. Cl.: H01M 10/42, H01M 10/48, H01M 6/50, H04Q 9/00, H01M 50/569

(54) **BATTERY CELL TEMPERATURE MEASUREMENT WITH RFID TAGS**
BATTERIEZELLENTEMPERATURMESSUNG MIT RFID-ETIKETTEN
MESURE DE TEMPÉRATURE DE PILE DE BATTERIE AVEC DES ÉTIQUETTES RFID

(43) Date of publication of application: 26.02.2020
(73) Proprietor: Samsung SDI Co., Ltd., Gyeonggi-do 17084 (KR)
(72) Inventor: ERHART, Michael, 8054 Seiersberg-Pirka (AT)
(74) Representative: Gulde & Partner

(56) References cited:
- WO-A1-2016/128160
- US-A1- 2007 008 141
- US-A1- 2015 132 614
- US-B2- 9 209 501

## Description

### Field of the Invention

The present invention relates to a battery module, wherein the temperature of battery cells is measured by radio frequency identification (RFID) tags. The present invention further relates to a method for measuring the temperature of battery cells of a battery module by means of RFID tags.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be a battery module formed of multiple battery submodules, each comprising battery cells coupled in series and/or parallel so as to provide a high energy density, e.g. for a hybrid vehicle. Such battery modules may be mechanically and electrically integrated, equipped with a thermal management system and set up for communication with each other and one or more electrical consumers to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters, a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit may communicate with the electrical consumers via a suitable communication bus, e.g. a CAN or SPI interface.

The BMS/BMU are, i. a., responsible for controlling the temperature of the battery module or each of its submodules. Resistive negative temperature coefficient sensors (NTC sensors) may therefore be attached to any one of the battery cells or selected battery cells of the battery module. The NTC sensors need to be connected to the BMS/BMU via cables and connectors, as the temperature is measured by the resistance of a temperature-dependent resistor comprised in the sensor.

WO 2016/128160 A1 discloses a device for communicating with a battery cell, characterised by communication equipment for wirelessly exchanging data with the battery cell and also relates to a battery cell, a battery module, a battery, a battery system, a vehicle and a method.

Connecting each of the NTC sensors via cables and connectors with the BMS/BMU is usually performed in a manual production process; in other words: it is time-consuming and cost-intensive.

Therefore, there is a need for a method of temperature measurement of battery cells within a battery module and a corresponding assembly of a battery module that allows for a reduction of productions costs and production time with regard to the implementation of a temperature measurement into a battery module.

It is thus an object of the present invention to overcome or reduce the above-identified drawbacks of the prior art and to provide a battery module that can be produced with lower costs and within a shorter time as compared to the prior art. It is further an object of the invention to provide a method of for measuring the temperature of battery cells of the battery module according to the invention. Moreover, it is an object of the invention to provide a battery module and a method for operating the battery module, which are energy-saving and tap-proof or at least reduce the possibilities of tapping.

### Description of the Invention

One or more of the drawbacks of the prior art could be avoided or at least reduced by means of the present invention as disclosed by the independent claims.

A first aspect of the present invention is related to a battery module, comprising a plurality of battery cells, at least one radio frequency identification (RFID) tag, at least one radio frequency receiver, and a printed circuit board (PCB). The PCB comprises the at least one radio frequency receiver. Each of the RFID tags is attached to at least one battery cell and configured to measure a temperature of the at least one battery cell it is attached to. Further, each of the RFID tags is a passive RFID tag configured to harvest energy supplied by at least one of the radio frequency receivers and to wirelessly send temperature signals within an operating range being limited by a short predefined distance *D,* the temperature signals corresponding to the temperature of the battery cell measured by the RFID tag being attached to the battery cell. The short predefined distance *D* is 10 cm, preferably 5 cm, more preferably 3 cm, and most preferably within a range of 0.5 cm to 2 cm. Each of the radio frequency receivers is configured to wirelessly supply energy to at least one of the RFID tags and to receive a temperature signal sent by at least one of the RFID tags. The PCB is positioned close to the battery cells, such that any one of the RFID tags is located within the short predefined distance *D* to at least one of the radio frequency receivers.

An advantage of the above-described battery module is that no cables and/or connectors are required for connecting temperature sensors within the battery module. Thus, no costs for manually connecting those cables and/or connectors arise. A further advantage of the above-described battery module is that due to the short distance between a sending RFID tag and a corresponding radio frequency receiver, the energy consumption could be drastically reduced by reducing the transmitting power and, correspondingly, the operating range of the RFID tag. Also, likewise due to the short distance between a sending RFID tag and a corresponding radio frequency receiver and the reduced operating range of the RFID tag, the safety from interception is reduced.

The power of the electromagnetic field of a sender - such as an RFID tag - decreases with the distance from said sender. As operating range of the sender, one could therefore define a distance, at which the power of the electromagnetic field generated by the sender has been decreased to a certain percentage, for example 10 %, of the power of the electromagnetic field at the position of the sender.

As the RFID tags are passive, the operating range of which depends on the power that can be harvested by the RFID tags from the energy supply, i. e. the electromagnetic field, generated by the radio frequency receivers. The power that can be harvested by the RFID tags depends in turn on the power of the electromagnetic field at the position of the radio frequency receivers and the distance between the radio frequency receivers and the RFID tags. Thus, predefining a certain short distance *D* that should act as limit for the operating range of an RFID tag means choosing the power and the distance of the energy supplying radio frequency receivers to the RFID tag such that the operating range of the RFID tag is limited by a radius of *D* around the RFID tag.

In one embodiment of the battery module according to the invention, the number of RFID tags equals the number of radio frequency receivers, and the radio frequency receivers are positioned such that any one of the RFID tags is located within the short predefined distance *D* to one and only one of the radio frequency receivers.

Preferably, the battery module further comprises a battery management system or is connectable to a battery management system, and wherein the radio frequency receives are each configured to pass a temperature signal received from a RFID tag or a signal based on the temperature signal received from a RFID tag along with a unique identification of the respective RFID tag to the battery management system.

The battery module according to the invention may further comprise a housing that encompasses the battery cells, the at least one radio frequency identification tag, the at least one radio frequency receiver, and the printed circuit board. Then, the housing can be dimensioned such that the operating ranges of any of the RFID tags are limited within the housing. This further increases the safety from interception of the battery module. The housing may also be made of metal or comprise metal, for example a metal layer, a metal grid or metal stripes on its inner or outer surface, in order to prevent any wireless signals to leave the space encompassed by the housing.

According to a preferred embodiment of the battery module, the printed circuit board comprises a balancing chip, and the at least one radio frequency receiver is realized on the balancing chip. Due to this integration of electronic components, production costs and production time can be further reduced.

In a preferred embodiment of the battery module according to the invention, at least one of the radio frequency identification tags is formed as a label.

In a preferred embodiment of the battery module according to the invention, at least one of the radio frequency identification tags is glued onto the battery cell it is attached to. This further simplifies the production process.

In a preferred embodiment of the battery module, the at least one RFID tag is configured to measure the temperature of the battery cell it is attached to. Also, the RFID tag is configured to send a temperature signal based on a measured temperature of the battery cell it is attached to.

Preferably, at least one RFID tag is configured to measure a temperature of the battery cell it is attached to by means of a diode being integrated into said RFID tag.

In one embodiment of the battery module, at least one RFID tag is configured to measure a temperature of the battery cell it is attached to by means of a temperature sensor connected to or integrated into said RFID tag.

Another aspect of the invention relates to a method for measuring the temperature of battery cells of a battery module. Thereby, the battery module has a plurality of battery cells, at least one RFID tag, at least one radio frequency receiver, and a PCB. The PCB comprises the at least one radio frequency receiver. Further, each of the RFID tags is attached to at least one battery cell. Also, the at least one radio frequency receiver is/are positioned such that any one of the RFID tags is located within a short predefined distance *D* to one and only one of the radio frequency receivers. The short predefined distance *D* is 10 cm, preferably 5 cm, more preferably 3 cm, and most preferably within a range of 0.5 cm to 2 cm. The method comprises the following steps:
a) wirelessly supplying energy via an electromagnetic field by the at least one radio frequency receiver;
b) wirelessly harvesting energy from the electromagnetic field by at least one radio frequency identification tag;
c) measuring, by each of the radio frequency identification tags, the temperature of the battery cell it is attached to;
d) wirelessly sending, by each of the radio frequency identification tags, a temperature signal within an operating range of the radio frequency identification tag being limited by the short predefined distance *D*;
e) receiving, by the each of the radio frequency receivers, the temperature signal(s) sent by these radio frequency identification tags, in the operation range of which said radio frequency receivers are located.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: shows an RFID tag according to the state of the art;
- Fig. 2: is a schematic cross sectional view of a battery module according to one embodiment of the present invention;
- Fig. 3: is a schematic view of the PCB, viewed from the position of the battery cells, according to the embodiment of the invention illustrated in Fig. 2.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to the illustrated embodiments. Accordingly, processes, elements, and techniques that are not considered necessary to those having ordinary skill in the art for a complete understanding of the aspects and features of the present invention may not be described. Further, in the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5%.

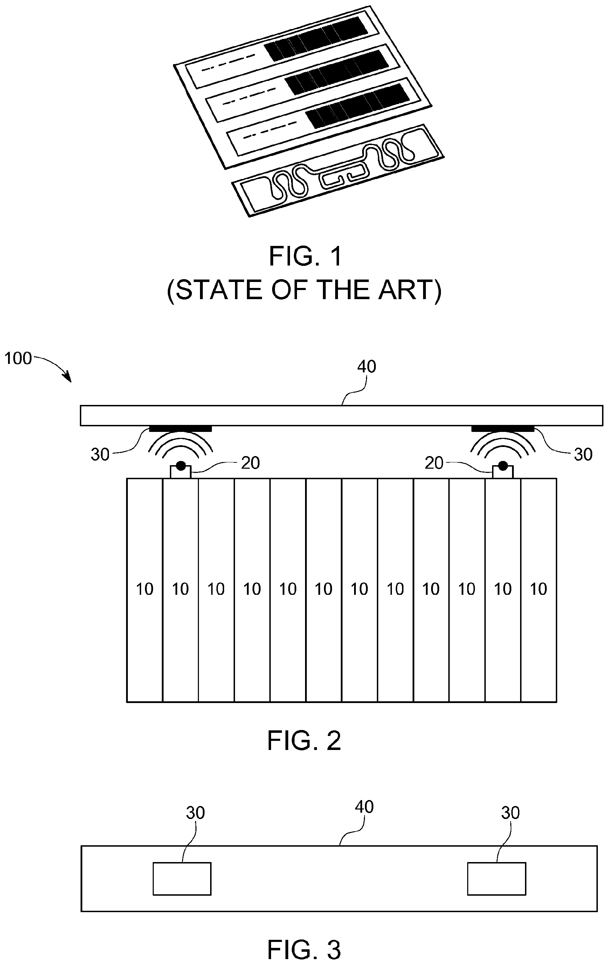

Figure 1 shows a picture of commercially available RFID tags formed as labels. Radio-frequency identification (RFID) uses electromagnetic fields to automatically identify and track tags attached to objects. The tags contain electronically-stored information. Passive tags collect energy from a nearby RFID reader's interrogating radio waves. Active tags have a local power source (such as a battery) and may operate hundreds of meters from the RFID reader. Unlike a barcode, the tag need not be within the line of sight of the reader, so it may be embedded in the tracked object. RFID is one method for Automatic Identification and Data Capture (AIDC).

RFID tags are used in many industries, for example, an RFID tag attached to an automobile during production can be used to track its progress through the assembly line; RFID-tagged pharmaceuticals can be tracked through warehouses; and implanting RFID microchips in livestock and pets allows for positive identification of animals.

A radio-frequency identification system uses tags or labels attached to the objects to be identified. Two-way radio transmitter-receivers called interrogators or readers (throughout this specification and the claims also referred to as "radio frequency receivers") send a signal to the tag and read its response.

RFID tags can be either passive, active or battery-assisted passive. An active tag has an on-board battery and periodically transmits its ID signal. A battery-assisted passive (BAP) has a small battery on board and is activated when in the presence of an RFID reader. A passive tag is cheaper and smaller because it has no battery; instead, the tag uses the radio energy transmitted by the reader. However, to operate a passive tag, it must be illuminated with a power level roughly a thousand times stronger than for signal transmission. That makes a difference in interference and in exposure to radiation.

Tags may either be read-only, having a factory-assigned serial number that is used as a key into a database, or may be read/write, where object-specific data can be written into the tag by the system user. Field programmable tags may be write-once, read-multiple; "blank" tags may be written with an electronic product code by the user.

RFID tags contain at least three parts: an integrated circuit that stores and processes information and that modulates and demodulates radio-frequency (RF) signals; a means of collecting DC power from the incident reader signal; and an antenna for receiving and transmitting the signal. The tag information is stored in a non-volatile memory. The RFID tag includes either fixed or programmable logic for processing the transmission and sensor data, respectively.

An RFID reader transmits an encoded radio signal to interrogate the tag. The RFID tag receives the message and then responds with its identification and other information.

Figure 2 is a schematic cross sectional view of a battery module 100 according to one embodiment of the present invention. Each of the twelve battery cells 10 may provide a voltage of approximately 4 V. The battery cells 10 may be coupled in series such that a total voltage of 48 V results between first and last battery cell 10. The twelve battery cells 10 may form one of number of submodules of battery module 100, the submodules preferably being coupled in parallel. In the latter case, Fig. 2 illustrates only a cross sectional view through one of the submodules of battery module 100.

Onto two of the twelve battery cells, an RFID tag 20 is attached. The RFID tags 20 are passive RFID tags. The RFID tags 20 each have the form of a label as depicted, by way of example, in Fig. 1, and are glued onto the battery cells 10.

A printed circuit board 40 (PCB) is arranged directly above the battery cells 10. On the lower side of the PCB, two radio frequency receivers 30 are mounted on or integrated in the PCB such that for each of the two RFID tags 20, one radio frequency receiver 30 is positioned directly opposite to the RFID tag 20. Here, the terms "above," "lower," "opposite," "left," "right," and the like refer to the assembly and orientation of the device as depicted in Fig. 2. For each of the RFID tags 20, the distance between the RFID tag 20 and the opposite radio frequency receiver 30 is rather short, for example 1 cm.

The energy - or correspondingly the power (energy per time unit) - that is supplied by the each of the radio frequency receivers 30 is chosen such that the operating range of each of the RFID tags 20 suffices to reach the radio frequency receivers 30. In other words, the operating range of each of the RFID tags 20 is approximately 1 cm.

Each RFID tag 20 is capable to measure the temperature of the battery cell 10 it is attached to (i. e. glued onto) by a diode (not shown) integrated in the RFID tag 20 and configured to send a signal corresponding to the measured temperature (temperature signal). The temperature signal of the RFID tag 20 depicted left (right) in Fig. 2 is then received by the radio frequency receiver 30 depicted left (right). The temperature signals received by the radio frequency receivers 30 may then be evaluated on the PCB or directly passed to a BMS/BMU (not shown) being connected to the PCB or arranged on the PCB. Also, the radio frequency receivers 30 may be part of an already existing balancing chip (not shown) being integrated in the PCB.

Figure 3 is a schematic view of the PCB, viewed from the position of the battery cells, according to the embodiment of the invention illustrated in Fig. 2. Two radio frequency receivers 30 are arranged on or integrated into the PCB. The positions of the radio frequency receivers 30 on the PCB are chosen such that they are located directly opposite to corresponding RFID tags 20 when the PCB is mounted or arranged in the battery module 100 as depicted in Fig. 2.

A person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 10: battery cell
- 20: radio frequency identification (RFID) tag(s)
- 30: radio frequency receiver(s)
- 40: printed circuit board (PCB)
- 100: battery module

## Claims

1. A battery module (100), comprising:
a plurality of battery cells (10);
at least one radio frequency identification tag (20);
at least one radio frequency receiver (30); and
a printed circuit board (40) comprising the at least one radio frequency receiver (30),
wherein each of the radio frequency identification tags (20) is attached to at least one battery cell (10) and configured to measure a temperature of the at least one battery cell (10) it is attached to,
wherein each of the radio frequency identification tags (20) is a passive radio frequency identification tag (20) configured to harvest energy supplied by at least one of the radio frequency receivers (30) and to wirelessly send temperature signals within an operating range being limited by a short predefined distance *D,* the temperature signals corresponding to the temperature of the battery cell (10) measured by the radio frequency identification tag (20) being attached to the battery cell (10),
wherein the short predefined distance *D* is 10 cm, preferably 5 cm, more preferably 3 cm, and most preferably within a range of 0.5 cm to 2 cm,
wherein each of the radio frequency receivers (30) is configured to wirelessly supply energy to at least one of the radio frequency identification tags (20) and to receive a temperature signal sent by at least one of the radio frequency identification tags (20), and
wherein the printed circuit board (40) is positioned close to the battery cells (10), such that any one of the radio frequency identification tags (20) is located within the short predefined distance *D* to at least one of the radio frequency receivers (30).

2. The battery module (100) according to claim 1,
wherein the number of radio frequency identification tags (20) equals the number of radio frequency receivers (30), and
wherein the radio frequency receivers (30) are positioned such that any one of the radio frequency identification tags (20) is located within the short predefined distance *D* to one of the radio frequency receivers (30).

3. The battery module (100) according to any one of claims 1 to 2, wherein the battery module (100) further comprises a battery management system or is connectable to a battery management system, and wherein the radio frequency receives (30) are each configured to pass a temperature signal received from a radio frequency identification tag (20) or a signal based on the temperature signal received from a radio frequency identification tag (20) along with a unique identification of the respective radio frequency identification tag (20) to the battery management system.

4. The battery module (100) according to any one of claims 1 to 3, further comprising a housing that encompasses the battery cells (10), the at least one radio frequency identification tag (20), the at least one radio frequency receiver (30), and the printed circuit board (40).

5. The battery module (100) according to any one of claims 1 to 4, wherein the printed circuit board (40) comprises a balancing chip, and wherein the at least one radio frequency receiver (30) is realized on the balancing chip.

6. The battery module (100) according to any one of claims 1 to 5, wherein at least one of the radio frequency identification tags (20) is formed as a label and/or is glued onto the battery cell (10) it is attached to.

7. The battery module (100) according to any one of claims 1 to 6, wherein the at least one radio frequency identification tag (20) is configured to measure the temperature of the battery cell (10) it is attached to and is further configured to send a temperature signal based on a measured temperature of the battery cell (10) it is attached to.

8. The battery module (100) according to claim 7, wherein at least one radio frequency identification tag (20) is configured to measure a temperature of the battery cell (10) it is attached to by means of a diode being integrated into said radio frequency identification tag (20).

9. The battery module (100) according to any one of claims 1 to 6, wherein at least one radio frequency identification tag (20) is configured to measure a temperature of the battery cell (10) it is attached to by means of a temperature sensor connected to or integrated into said radio frequency identification tag (20).

10. A method for measuring the temperature of battery cells (10) of a battery module (100) having a plurality of battery cells (10), at least one radio frequency identification tag (20), at least one radio frequency receiver (30), and a printed circuit board (40) comprising the at least one radio frequency receiver (30), wherein each of the radio frequency identification tags (20) is attached to at least one battery cell (10), and wherein the at least one radio frequency receiver (30) is positioned such that any one of the radio frequency identification tags (20) is located within a short predefined distance *D* to one of the radio frequency receivers (30), wherein the short predefined distance *D* is 10 cm, preferably 5 cm, more preferably 3 cm, and most preferably within a range of 0.5 cm to 2 cm, the method comprising the steps:
a) wirelessly supplying energy via an electromagnetic field by the at least one radio frequency receiver (30);
b) wirelessly harvesting energy from the electromagnetic field by at least one radio frequency identification tag (20);
c) measuring, by each of the radio frequency identification tags (20), the temperature of the battery cell (10) it is attached to;
d) wirelessly sending, by each of the radio frequency identification tags (20), a temperature signal within an operating range of the radio frequency identification tag (20) being limited by the short predefined distance *D*; and
e) receiving, by the each of the radio frequency receivers (30), the temperature signal(s) sent by the radio frequency identification tags (20), in the operation range of where said radio frequency receivers (30) are located.

## Patentansprüche

1. Batteriemodul (100), umfassend:
eine Vielzahl von Batteriezellen (10);
mindestens ein Funkfrequenz-Identifikationsetikett (20);
mindestens einen Funkfrequenzempfänger (30); und
eine Leiterplatte (40), die den mindestens einen Funkfrequenzempfänger (30) aufweist,
wobei jedes der Funkfrequenz-Identifikationsetikette (20) an mindestens einer Batteriezelle (10) befestigt und konfiguriert ist, um eine Temperatur der mindestens einen Batteriezelle (10) zu messen, an der es befestigt ist,
wobei jedes der Funkfrequenz-Identifikationsetikette (20) ein passives Funkfrequenz-Identifikationsetikett (20) ist, das konfiguriert ist, um Energie zu sammeln, die von mindestens einem der Funkfrequenzempfänger (30) geliefert wird, und um drahtlos Temperatursignale innerhalb eines Betriebsbereichs zu senden, der durch einen kurzen vordefinierten Abstand D begrenzt ist, wobei die Temperatursignale der Temperatur der Batteriezelle (10) entsprechen, die von dem an der Batteriezelle (10) befestigten Funkfrequenz-Identifikationsetikett (20) gemessen wird,
wobei der kurze vordefinierte Abstand *D* 10 cm, vorzugsweise 5 cm, noch bevorzugter 3 cm beträgt, und am meisten bevorzugt in einem Bereich von 0,5 cm bis 2 cm liegt,
wobei jedes der Funkfrequenzetiketten (30) konfiguriert ist, um drahtlos Energie an mindestens eines der Funkfrequenzidentifikationsetikette (20) zu liefern und ein Temperatursignal zu empfangen, das von mindestens einem der Funkfrequenzidentifikationsetikette (20) gesendet wird, und
wobei die Leiterplatte (40) in der Nähe der Batteriezellen (10) positioniert ist, so dass sich jedes der Funkfrequenz-Identifikationsetikette (20) innerhalb des kurzen vordefinierten Abstands *D* zu mindestens einem der Funkfrequenzempfänger (30) befindet.

2. Batteriemodul (100) nach Anspruch 1,
wobei die Anzahl der Funkfrequenz-Identifikationsetikette (20) gleich der Anzahl der Funkfrequenzempfänger (30) ist, und
wobei die Funkfrequenzempfänger (30) so positioniert sind, dass sich jedes der Funkfrequenz-Identifikationsetikette (20) innerhalb der kurzen vordefinierten Entfernung D zu einem der Funkfrequenzempfänger (30) befindet.

3. Batteriemodul (100) nach einem der Ansprüche 1 bis 2, wobei das Batteriemodul (100) ferner ein Batteriemanagementsystem umfasst oder mit einem Batteriemanagementsystem verbindbar ist, und wobei die Funkfrequenzempfänger (30) jeweils konfiguriert sind, um ein von einem Funkfrequenzidentifikationsetikett (20) empfangenes Temperatursignal oder ein auf dem von einem Funkfrequenzidentifikationsetikett (20) empfangenen Temperatursignal basierendes Signal zusammen mit einer eindeutigen Identifikation des jeweiligen Funkfrequenzidentifikationsetiketts (20) an das Batteriemanagementsystem weiterzuleiten.

4. Batteriemodul (100) nach einem der Ansprüche 1 bis 3, ferner umfassend ein Gehäuse, das die Batteriezellen (10), das mindestens eine Funkfrequenz-Identifikationsetikett (20), den mindestens einen Funkfrequenzempfänger (30) und die Leiterplatte (40) umschließt.

5. Batteriemodul (100) nach einem der Ansprüche 1 bis 4, wobei die Leiterplatte (40) einen Balance-Chip umfasst und wobei der mindestens eine Funkfrequenzempfänger (30) auf dem Balance-Chip realisiert ist.

6. Batteriemodul (100) nach einem der Ansprüche 1 bis 5, wobei mindestens eines der Funkfrequenz-Identifikationsetiketten (20) als Etikett ausgebildet ist und/oder auf die Batteriezelle (10), an der es befestigt ist, aufgeklebt ist.

7. Batteriemodul (100) nach einem der Ansprüche 1 bis 6, wobei das mindestens eine Funkfrequenz-Identifikationsetikett (20) konfiguriert ist, um die Temperatur der Batteriezelle (10) zu messen, an der es befestigt ist, und ferner konfiguriert ist, um ein Temperatursignal auf der Grundlage einer gemessenen Temperatur der Batteriezelle (10) zu senden, an der es befestigt ist.

8. Batteriemodul (100) nach Anspruch 7, wobei mindestens ein Funkfrequenz-Identifikationsetikett (20) konfiguriert ist, um eine Temperatur der Batteriezelle (10), an der es befestigt ist, mittels einer Diode zu messen, die in das Funkfrequenz-Identifikationsetikett (20) integriert ist.

9. Batteriemodul (100) nach einem der Ansprüche 1 bis 6, wobei mindestens ein Funkfrequenz-Identifikationsetikett (20) konfiguriert ist, um eine Temperatur der Batteriezelle (10), an der es befestigt ist, mittels eines Temperatursensors zu messen, der mit dem Funkfrequenz-Identifikationsetikett (20) verbunden oder darin integriert ist.

10. Verfahren zum Messen der Temperatur von Batteriezellen (10) eines Batteriemoduls (100), umfassend eine Vielzahl von Batteriezellen (10), mindestens ein Funkfrequenz-Identifikationsetikett (20), mindestens einen Funkfrequenzempfänger (30) und eine Leiterplatte (40), die den mindestens einen Funkfrequenzempfänger (30) umfasst, wobei jedes der Funkfrequenz-Identifikationsetikette (20) an mindestens einer Batteriezelle (10) befestigt ist, und wobei der mindestens eine Funkfrequenzempfänger (30) so positioniert ist, dass sich jedes der Funkfrequenz-Identifikationsetikette (20) innerhalb eines kurzen vordefinierten Abstands *D* zu einem der Funkfrequenzempfänger (30) befindet, wobei der kurze vordefinierte Abstand *D* 10 cm, vorzugsweise 5 cm, noch bevorzugter 3 cm beträgt, und am meisten bevorzugt innerhalb eines Bereichs von 0.5 cm bis 2 cm liegt, wobei das Verfahren die folgenden Schritte umfasst:
a) drahtloses Liefern von Energie über ein elektromagnetisches Feld durch den mindestens einen Funkfrequenzempfänger (30);
b) drahtloses Sammeln von Energie aus dem elektromagnetischen Feld durch mindestens ein Funkfrequenz-Identifikationsetikett (20);
c) Messen, durch jedes Funkfrequenz-Identifikationsetikett (20), der Temperatur der Batteriezelle (10), an der es befestigt ist,;
d) drahtloses Senden eines Temperatursignals durch jedes der Funkfrequenz-Identifikationsetikette (20) innerhalb eines Betriebsbereichs des FunkfrequenzIdentifikationsetiketts (20), das durch den kurzen vordefinierten Abstand *D* begrenzt ist; und
e) Empfangen des/der Temperatursignale(s), das/die von den Funkfrequenz-Identifizierungsetiketten (20) gesendet wird/werden, durch jeden der Funkfrequenzempfänger (30) in dem Betriebsbereich, in dem sich die besagten Funkfrequenzempfänger (30) befinden.

## Revendications

1. Module de batterie (100), comprenant :
une pluralité d'éléments de batterie (10) ;
au moins une étiquette d'identification par radiofréquence (20) ;
au moins un récepteur radiofréquence (30) ; et
une carte de circuits imprimés (40) comprenant le au moins un récepteur radiofréquence (30),
dans lequel chacune des étiquettes d'identification par radiofréquence (20) est fixée à au moins un élément de batterie (10) et configurée pour mesurer une température du au moins un élément de batterie (10) auquel elle est fixée,
dans lequel chacune des étiquettes d'identification par radiofréquence (20) est une étiquette d'identification par radiofréquence passive (20) configurée pour collecter l'énergie amenée par au moins l'un des récepteurs radiofréquence (30) et pour envoyer sans fil des signaux de température dans une plage de fonctionnement limitée par une courte distance prédéfinie D, les signaux de température correspondant à la température de l'élément de batterie (10) mesurée par l'étiquette d'identification par radiofréquence (20) fixée à l'élément de batterie (10),
dans lequel la courte distance prédéfinie D est 10 cm, de préférence 5 cm, de préférence encore 3 cm, et idéalement dans une plage de 0,5 cm à 2 cm,
dans lequel chacun des récepteurs radiofréquence (30) est configuré pour amener sans fil de l'énergie à au moins l'une des étiquettes d'identification par radiofréquence (20) et pour recevoir un signal de température envoyé par au moins l'une des étiquettes d'identification par radiofréquence (20), et
dans lequel la carte de circuits imprimés (40) est positionnée à proximité des éléments de batterie (10), de telle sorte que l'une quelconque des étiquettes d'identification par radiofréquence (20) est située dans la courte distance prédéfinie D par rapport à l'au moins un des récepteurs radiofréquence (30).

2. Module de batterie (100) selon la revendication 1,
dans lequel le nombre d'étiquettes d'identification par radiofréquence (20) est égal au nombre de récepteurs radiofréquence (30), et
dans lequel les récepteurs radiofréquence (30) sont positionnés de telle sorte que l'une quelconque des étiquettes d'identification par radiofréquence (20) est située dans la courte distance prédéfinie D par rapport à l'un des récepteurs radiofréquence (30).

3. Module de batterie (100) selon l'une quelconque des revendications 1 à 2, dans lequel le module de batterie (100) comprend en outre un système de gestion de batterie ou peut être connecté à un système de gestion de batterie, et dans lequel les récepteurs radiofréquence (30) sont configurés chacun pour faire passer un signal de température reçu d'une étiquette d'identification par radiofréquence (20) ou un signal basé sur le signal de température reçu d'une étiquette d'identification par radiofréquence (20) conjointement avec une identification unique de l'étiquette d'identification par radiofréquence (20) respective au système de gestion de batterie.

4. Module de batterie (100) selon l'une quelconque des revendications 1 à 3, comprenant en outre un boîtier qui inclut les éléments de batterie (10), la au moins une étiquette d'identification par radiofréquence (20), le au moins un récepteur radiofréquence (30), et la carte de circuits imprimés (40).

5. Module de batterie (100) selon l'une quelconque des revendications 1 à 4, dans lequel la carte de circuits imprimés (40) comprend une puce d'équilibrage, et dans lequel le au moins un récepteur radiofréquence (30) est réalisé sur la puce d'équilibrage.

6. Module de batterie (100) selon l'une quelconque des revendications 1 à 5, dans lequel au moins l'une des étiquettes d'identification par radiofréquence (20) est formée comme une vignette et/ou est collée sur l'élément de batterie (10) auquel elle est fixée.

7. Module de batterie (100) selon l'une quelconque des revendications 1 à 6, dans lequel la au moins une étiquette d'identification par radiofréquence (20) est configurée pour mesurer la température de l'élément de batterie (10) auquel elle est fixée et est en outre configurée pour envoyer un signal de température sur la base d'une température mesurée de l'élément de batterie (10) auquel elle est fixée.

8. Module de batterie (100) selon la revendication 7, dans lequel au moins une étiquette d'identification par radiofréquence (20) est configurée pour mesurer une température de l'élément de batterie (10) auquel elle est fixée au moyen d'une diode intégrée dans ladite étiquette d'identification par radiofréquence (20).

9. Module de batterie (100) selon l'une quelconque des revendications 1 à 6, dans lequel au moins une étiquette d'identification par radiofréquence (20) est configurée pour mesurer une température de l'élément de batterie (10) auquel elle est fixée au moyen d'un capteur de température connecté à ou intégré dans ladite étiquette d'identification par radiofréquence (20).

10. Procédé pour mesurer la température d'éléments de batterie (10) d'un module de batterie (100) présentant une pluralité d'éléments de batterie (10), au moins une étiquette d'identification par radiofréquence (20), au moins un récepteur radiofréquence (30), et une carte de circuits imprimés (40) comprenant le au moins un récepteur radiofréquence (30), dans lequel chacune des étiquettes d'identification par radiofréquence (20) est fixée à au moins un élément de batterie (10), et dans lequel le au moins un récepteur radiofréquence (30) est positionné de telle sorte que l'une quelconque des étiquettes d'identification par radiofréquence (20) est située dans une courte distance prédéfinie D par rapport à l'un des récepteurs radiofréquence (30), dans lequel la courte distance prédéfinie D est 10 cm, de préférence 5 cm, de préférence encore 3 cm, et idéalement dans une plage de 0,5 cm à 2 cm, le procédé comprenant les étapes consistant à :
a) amener sans fil de l'énergie par le biais d'un champ électromagnétique au moyen du au moins un récepteur radiofréquence (30) ;
b) collecter sans fil l'énergie provenant du champ électromagnétique au moyen de l'au moins une étiquette d'identification par radiofréquence (20) ;
c) mesurer, au moyen de chacune des étiquettes d'identification par radiofréquence (20), la température de l'élément de batterie (10) auquel elle est fixée ;
d) envoyer sans fil, à l'aide de chacune des étiquettes d'identification par radiofréquence (20), un signal de température dans une plage de fonctionnement de l'étiquette d'identification par radiofréquence (20) limitée par la courte distance prédéfinie D ; et
e) recevoir, au moyen de chacun des récepteurs radiofréquence (30), le signal (les signaux) de température(s) envoyé(s) par les étiquettes d'identification par radiofréquence (20), dans la plage de fonctionnement de l'endroit où lesdits récepteurs radiofréquence (30) sont situés.
